# EUROPÄISCHE PATENTSCHRIFT

(11) **EP 0 530 460 B1**
(45) Veröffentlichungstag und Bekanntmachung des Hinweises auf die Patenterteilung: **19.07.1995**
(21) Anmeldenummer: 92111348.6
(22) Anmeldetag: 03.07.1992
(51) Int. Cl.: B60T 13/66, B60T 17/22

(54) **Anhängerbremsanlage**
Trailer brake system
Système de freinage pour remorque

(30) Priorität: 03.09.1991 DE 4129203
(43) Veröffentlichungstag der Anmeldung: 10.03.1993
(73) Patentinhaber: WABCO STANDARD GmbH, D-53008 Bonn (DE)
(72) Erfinder: Krüger, Gerd, W-3016 Seelze 2 (DE); Lichtenberg, Wolfgang, W-3000 Hannover 91 (DE); Schult, Manfred, Dr., W-3008 Garbsen 8 (DE)
(74) Vertreter: Schrödter, Manfred, Dipl.-Ing.

(56) Entgegenhaltungen:
- EP-A- 0 199 895
- EP-A- 0 268 045
- WO-A-89/03781

## Beschreibung

Die Erfindung betrifft eine Anhängerbremsanlage nach den Oberbegriffen der Patentansprüche 1 bis 3.

Wird unterstellt, daß das in Figur 1 der DE 32 07 793 A1 dargestellte Anhängerbremsventil eine Notbremseinrichtung und eine Absperreinrichtung im Sinne des Oberbegriffs der Patentansprüche 1 bis 3 beinhaltet, so zeigt diese Schrift eine Anhängerbremsanlage der eingangs genannten Arten.

Diese Anhängerbremsanlage wird über die Vorratsleitung von dem den Anhänger ziehenden oder schiebenden Zugfahrzeug mit Druckmittel zur Betätigung der wenigstens einen Zuspanneinrichtung versorgt. Das Druckmittel, in der Regel Druckluft, wird in dem Druckspeicher gespeichert, welchem es über die in Richtung des Druckspeichers durchlässige Absperreinrichtung zugeführt wird. Die Absperreinrichtung dient der Sicherung des Druckspeichers gegen ein Rückströmen von Druckmittel in die Vorratsleitung, wie es beispielsweise bei defekter Vorratsleitung und bei vom Zugfahrzeug abgekuppeltem Anhänger vorkommen könnte.

Das in den Oberbegriffen der Patentansprüche 2 und 3 erwähnte elektrisch betätigte Bremsventil dient in Verbindung mit der elektrischen Bremsleitung und der Steuerelektronik der normalen Betätigung der Zuspanneinrichtung und damit der Anhängerbremsanlage. Ein im Zugfahrzeug erzeugtes elektrisches Bremssignal wird über die elektrische Bremsleitung der Steuerelektronik zugeführt und in dieser zu einem Steuersignal für das Bremsventil aufbereitet. Bei Erhalt dieses Steuersignals verbindet das Bremsventil den Druckspeicher mit der Zuspanneinrichtung, bis diese, genau: deren Arbeitskammer, auf einen von dem Wert des Steuersignals abhängigen Druck, den Bremsdruck, aufgefüllt ist.

Eine solche Anhängerbremsanlage läßt sich als "elektrisch gesteuert" bezeichnen.

Eine Störung der Druckmittelversorgung der Anhängerbremsanlage, beispielsweise durch einen Abriß der Vorratsleitung, liegt vor, wenn der Druck in der Vorratsleitung, nachstehend Vorratsleitungsdruck, wenigstens um einen vorbestimmten Wert von dem Nenn-Vorratsleitungsdruck abgefallen ist. Dieser vorbestimmte Wert wird im folgenden als Störungs-Druckabfall bezeichnet. Dieser kann als Absolutwert, aber auch auf den Speicherdruck bezogen, beispielsweise als Druckdifferenz oder als Verhältniswert zu dem Speicherdruck, bestimmt sein. Durch den Störungs-Druckabfall wird die Notbremseinrichtung zum Ansprechen gebracht. Die Notbremseinrichtung verbindet nunmehr die Zuspanneinrichtung mit dem Druckspeicher und löst dadurch eine automatische Anhängerbremsung aus. Die Notbremseinrichtung kann so ausgebildet sein, daß sie beim Ansprechen den vorhandenen Speicherdruck durchläßt, also eine Vollbremsung auslöst, sie kann aber auch so ausgebildet sein, daß sie, abhängig von dem Wert des in der Vorratsleitung aufrechterhaltenen Rest-Vorratsleitungsdrucks, den zu der Zuspanneinrichtung durchgelassenen Druck abstuft, also Teilbremsungen auslöst.

Aus der EP-A-0 199 895 ist eine Anhängerbremsanlage mit einer eine Vollbremsung auslösenden Notbremseinrichtung bekannt, in der das Druckmittel bei einem Störungs-Druckabfall der Zuspanneinrichtung über eine Drossel zugeführt wird Dadurch bewirkt diese Anhängerbremsanlage ein gedämpftes Einsetzen der Vollbremsung.

Die automatische Anhängerbremsung kann zur Unzeit passieren und dadurch für den Lastzug, dem der Anhänger zugeordnet ist, aber auch für andere Verkehrsteilnehmer, eine Gefahrensituation hervorrufen. Dabei liegt normalerweise im Falle einer Störung der Druckmittelversorgung noch gar keine Beeinträchtigung der Funktionssicherheit der Anhängerbremsanlage vor, weil der Druckspeicher noch einen hohen Speicherdruck oder den vollen Nenn-Speicherdruck führt. Diese Feststellung gilt um so mehr dann, wenn der Druckspeicher reichlich bemessen ist.

Der Erfindung liegt die Aufgabe zugrunde, eine Anhängerbremsanlage der eingangs genannten Arten mit einfachen Mitteln so zu verbessern, daß sie die Schaffung einer Gefahrensituation in Falle einer Störung der Druckmittelversorgung vermeidet.

Diese Aufgabe wird durch die in den Patentansprüchen 1 bis 3 angegebene Erfindung gelöst. Vorteilhafte Ausgestaltungen und Weiterbildungen sind in den Unteransprüchen angegeben.

Der Erfindung liegt der Gedanke zugrunde, die gefahrenträchtige automatische Anhängerbremsung solange hinauszuzögern wie der Speicherdruck noch wenigstens den Wert eines Sicherungsdruckes aufweist, wobei dieser so vorbestimmt ist, daß er noch eine weitgehende Funktionssicherheit der Anhängerbremsanlage gewährleistet.

Die Zuspanneinrichtung kann von jeder geeigneten Bauart sein. Hat sie mehrere Arbeitskammern, so werden zweckmäßigerweise die Notbremseinrichtung und das Bremsventil mit verschiedenen Arbeitskammern verbunden. Sollen die Notbremseinrichtung und das Bremsventil jedoch mit derselben und möglicherweise einzigen Arbeitskammer verbunden werden, so kann dies über ein Wechselventil geschehen, dessen erster Eingang mit dem Ausgang des Bremsventils, dessen zweiter Eingang mit dem Ausgang der Notbremseinrichtung und dessen Ausgang mit der Arbeitskammer verbunden sind.

Die Erfindung läßt sich durch eine mit dem Zugfahrzeug verbindbare Bremsdrucksteuerleitung und eine mit dieser verbundene und von dieser gesteuerte Betriebsbremseinrichtung fortbilden. Diese Fortbildung ermöglicht, die Bremsdrucksteuerleitung und den darin herangeführten Bremssteuerdruck in Falle eines Ausfalls in den elektrischen Komponenten oder der elektrischen Versorgung der Anhängerbremsanlage zur Notsteuerung derselben heranzuziehen. Die so ausgebildete Anhängerbremsanlage läßt sich als eine "elektrisch gesteuerte mit redundanter Drucksteuerung" bezeichnen.

Weitere Vorteile und Fortbildungsmöglichkeiten der Erfindung werden in deren nunmehr folgender Erläuterung anhand zeichnerisch dargestellter Ausführungsbeispiele angegeben.

Unter durchgehender Verwendung gleicher Bezugszeichen für Bauelemente mit gleichen Funktionen sowie durchgehender Linien für Druckmittelleitungen und strichpunktierter Linien für elektrische Leitungen zeigen schematisch
- Figur 1: eine elektrisch gesteuerte Anhängerbremsanlage,
- Figur 2: eine andere elektrisch gesteuerte Anhängerbremsanlage.

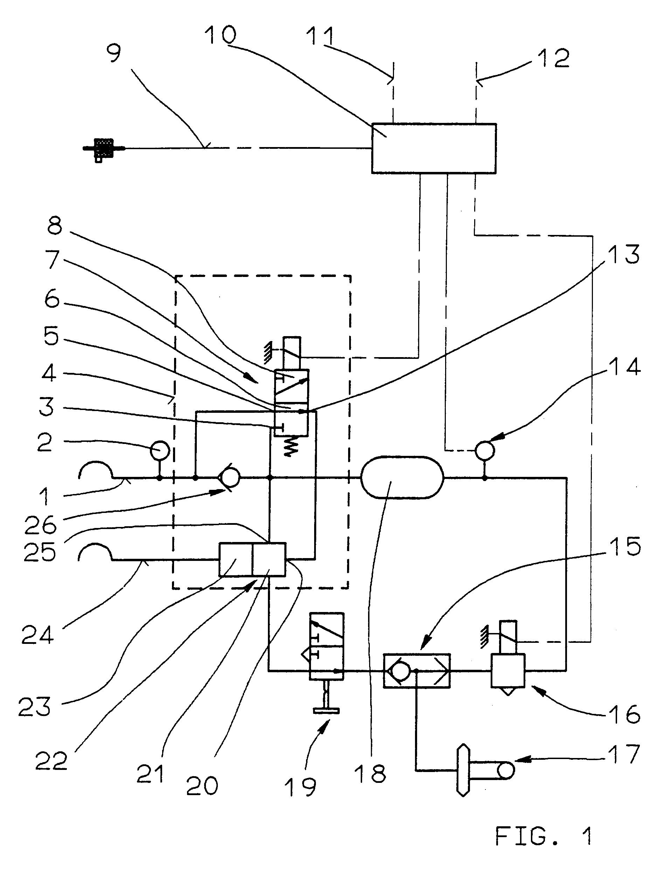

Die in Figur 1 dargestellte Anhängerbremsanlage besteht in ihrer Grundausführung aus einer Vorratsleitung (1), einer elektrischen Bremsleitung (9), einer Steuerelektronik (10, 14), enthaltend eine Steuereinheit (10) und einen Drucksensor (14), einem elektrisch betätigten Bremsventil (16), einer Notbremseinrichtung (21), einem elektrisch betätigten 3/2-Wegeventil (7), einer Absperreinrichtung (26), einem Druckspeicher (18) und einer Zuspanneinrichtung (17).

Die Vorratsleitung (1) und die elektrische Bremsleitung (9) sind in bekannter und daher nicht näher beschriebener Weise über einen Kupplungskopf bzw. eine elektrische Verbindung mit dem Zugfahrzeug verbindbar. Die Vorratsleitung (1) ist mit dem Druckspeicher (18) verbunden, und zwar über die in Richtung des Druckspeichers (18) durchlässige und die Gegenrichtung sperrende Absperreinrichtung (26), die beispielsweise als Rückschlagventil ausgebildet ist.

Der Druckspeicher (18) ist mit dem Eingang des elektrisch betätigten Bremsventils (16) verbunden, dessen Ausgang mit der Zuspanneinrichtung (17), genauer: einer Arbeitskammer derselben, in Verbindung steht. Die Zuspanneinrichtung (17) kann die einzige vorhandene sein, sie kann aber auch beispielhaft für mehrere Zuspanneinrichtungen stehen. Im letztgenannten Fall kann das Bremsventil (16) für mehrere Bremsventile stehen, deren jedes jeweils einer Zuspanneinrichtung oder einer Gruppe von Zuspanneinrichtungen zugeordnet ist.

Das 3/2-Wegeventil (7) weist einen ersten Anschluß (13), einen zweiten Anschluß (3) und einen dritten Anschluß (5) auf. Der erste Anschluß (13) ist mit einem Steuereingang (20) der Notbremseinrichtung (21), der zweite Anschluß (3) ist mit dem Druckspeicher (18), und der dritten Anschluß (5) ist mit der Vorratsleitung (1) verbunden. Die Verbindung zwischen dem Zweiten Anschluß (3) und dem Druckspeicher (18) erfolgt indirekt, indem der zweite Anschluß (3) an eine Verbindungsleitung zwischen der Absperreinrichtung (26) und dem Druckspeicher (18) angeschlossen ist. Der zweite Anschluß (3) kann aber auch direkt mit dem Druckspeicher (18) verbunden sein.

Das 3/2-Wegeventil (7) weist eine erste Schaltstellung (8) und eine zweite Schaltstellung (6) auf. In der ersten Schaltstellung (8) verbindet das 3/2-Wegeventil (7) seinen ersten Eingang (13) mit seinem zweiten Eingang (3). In der zweiten Schaltstellung (6) verbindet das 3/2-Wegeventil (7) seinen ersten Eingang (13) mit seinem dritten Eingang (5). Das 3/2-Wegeventil (7) nimmt in elektrisch betätigtem Zustand die erste Schaltstellung (8) und im übrigen, beispielsweise unter dem Einfluß einer Rückstellfeder, die zweite Schaltstellung (6) ein.

Die Zuspanneinrichtung (17), genauer: eine Arbeitskammer derselben, ist auch mit dem nicht näher bezeichneten Ausgang der Notbremseinrichtung (21) verbunden. Die Notbremseinrichtung (21) weist außer dem bereits erwähnten Steuereingang (20) einen Eingang (25) auf, der mit dem Druckspeicher (18) verbunden ist. Dieser Eingang (25) kann, je nach spezieller Ausgestaltung der Notbremseinrichtung (21), ein weiterer Steuereingang sein. Die Notbremseinrichtung (21) ist derart ausgebildet, daß sie eine Verbindung zwischen ihrem Eingang (25) und damit dem Druckspeicher (18) und ihrem Ausgang und damit der Zuspanneinrichtung (17) öffnet, womit sie eine automatische Anhängerbremsung auslöst, wenn sie an dem mit dem ersten Anschluß (13) des 3/2-Wegeventils (7) verbundenen Steuereingang (20) einen vorbestimmten Druckabfall feststellt. Die Notbremseinrichtung (21) ist so ausgebildet, daß dieser Druckabfall gleich dem Störungs-Druckabfall ist.

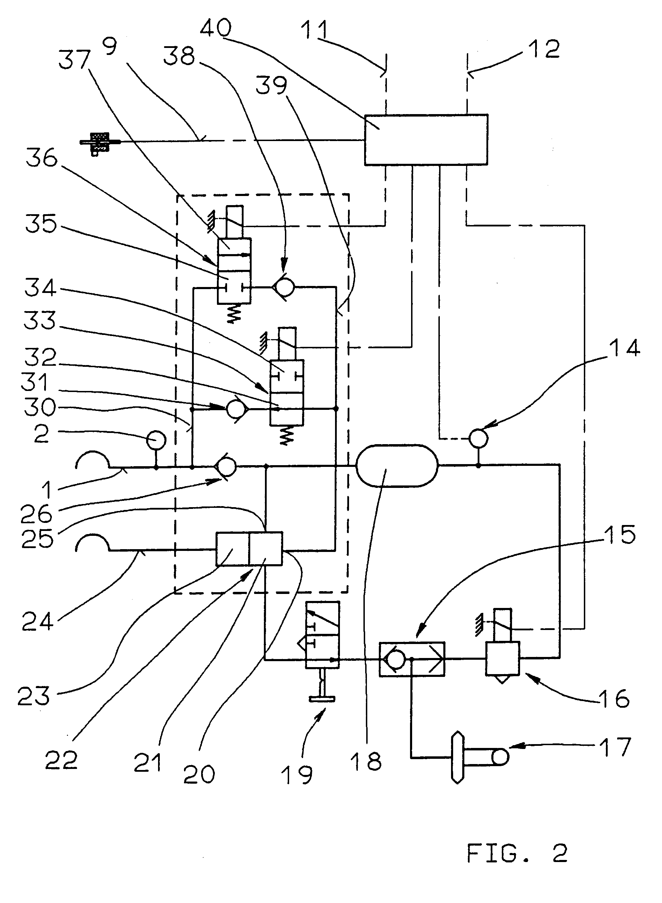

Eine derartige Notbremseinrichtung läßt sich beispielsweise auf einfache Weise aus Figur 2 der DE 30 31 105 A1 herstellen. Zu diesem Zweck braucht nur der eine Absperreinrichtung im Sinne der Absperreinrichtung (26) bildende dortige Lippendichtring durch ein in jede Richtung wirkendes Dichtelement, beispielsweise einen O-Ring, ersetzt zu werden. Die bekannte Notbremseinrichtung enthält außerdem eine hier nicht interessierende Absperreinrichtung für eine Bremssteuerdruckleitung.

Der Drucksensor (14) ist so angeordnet, daß er den Speicherdruck erfaßt. Der Drucksensor (14) kann als Schalter ausgebildet sein, der ein elektrisches Signal abgibt, wenn der Speicherdruck den Wert eines vorbestimmten Sicherungsdrucks oder einen geringeren Wert aufweist. Der Drucksensor (14) kann aber auch kontinuierlich arbeitend ausgebildet sein; in diesem Fall müßte die Steuereinheit (10) unter anderem auf das Erkennen des Sicherungsdrucks und der geringeren Werte programmiert sein. Der Sicherungsdruck liegt höher als der Vorratsleitungsdruck nach dem Störungs-Druckabfall.

Die Steuereinheit (10) ist eingangsseitig mit der elektrischen Bremsleitung (9) und dem Drucksensor (14) und ausgangsseitig mit dem Bremsventil (16) und dem 3/2-Wegeventil (7), genauer: mit deren elektrischen Betätigungsgliedern, verbunden. Die Steuereinheit (10) ist so ausgebildet, daß sie erkennt, daß die elektrische Bremsleitung (9) mit dem Zugfahrzeug verbunden ist und daß sie das 3/2-Wegeventil (7) betätigt, wenn sie mittels des Drucksensors (14) erkennt, daß der Speicherdruck den Wert des Sicherungsdrucks erreicht oder überschritten hat.

Wie durch Zuleitungen (11) und (12) angedeutet ist, kann die Steuereinheit (10) außerdem eingangsseitig mit Sensoren für Fahrzeugparameter, z. B. Lastsensoren und/oder Drehzahlsensoren verbunden sein, deren Signale sie bei ihrer nachstehend beschriebenen Funktion mit verarbeitet.

In der bisher beschriebenen Grundausführung funkioniert das Ausführungsbeispiel wie folgt.

Im Normalbetrieb sind die Vorratsleitung (1) und die elektrische Bremsleitung (9) mit dem Zugfahrzeug verbunden. Dabei wird der Druckspeicher (18) vom Zugfahrzeug her über die Vorratsleitung (1) bis zu einem Nenn-Speicherdruck aufgefüllt und auf diesem Druck gehalten. Der Nenn-Speicherdruck ist im wesentlichen gleich dem Nenn-Vorratsleitungsdruck. Erkennt die Steuerelektronik (10, 14) mittels des Drucksensors (14), daß der Speicherdruck den Wert des Sicherungsdrucks erreicht oder überschritten hat, so betätigt sie das 3/2-Wegeventil (7). Dieses wird dadurch in seine erste Schaltstellung (8) gestellt, in der es seinen ersten Eingang (13) mit seinem zweiten Eingang (3) und damit den Druckspeicher (18) mit dem Steuereingang (20) der Notbremseinrichtung verbindet. Der Speicherdruck ist bei Werten vom Sicherungsdrucks ab aufwärts hoch genug, die Notbremseinrichtung (21) vom Ansprechen abzuhalten.

Bei intakter Anhängerbremsanlage wird bei Betätigung der Zugfahrzeugbremsanlage auf die elektrische Bremsleitung (9) und damit auf die Steuereinheit (10) ein Betätigungssignal übertragen, dessen Wert von dem Fahrerwillen abhängt. Die Steuereinheit (10) bereitet dieses Betätigungssignal, gegebenenfalls unter Berücksichtigung der von den durch die Zuleitungen (11) und (12) angedeuteten Sensoren stammenden Signale, zu einem Steuersignal für das Bremsventil (16) auf. Der Wert des Steuersignales hängt von dem Wert des Betätigungssignals in der Bremsleitung (9), und, gegebenenfalls, von den Werten der durch die Zuleitungen (11) und (12) angedeuteten Sensoren ab. Das Bremsventil (16) verbindet bei Erhalt des Steuersignals die Zuspanneinrichtung (17) mit dem Druckspeicher (18), bis sich in der Zuspanneinrichtung (17) ein Bremsdruck aufgebaut hat, dessen Höhe dem Wert des Steuersignals entspricht.

Tritt nun eine Störung der Druckmittelversorgung der Anhängerbremsanlage auf, beispielsweise infolge eines Lecks in oder eines Abrisses der Vorratsleitung (1), so kann der Vorratsleitungsdruck um den Störungs-Druckabfall oder einen größeren Wert unter den Nenn-Vorratsleitungsdruck abfallen. Dieser Druckabfall teilt sich dem Steuereingang (20) der Notbremseinrichtung (21) jedoch nicht mit, weil über das in der ersten Schaltstellung (8) stehende 3/2-Wegeventil (7) am Steuereingang (20) der Notbremseinrichtung (21) der Speicherdruck bestehen bleibt.

Trotz der Störung der Druckmittelversorgung bleibt die Anhängerbremsanlage zunächst wie in intaktem Zustand über die elektrische Bremsleitung (9), die Steuereinheit (10) und das Bremsventil (16) funktionsfähig, allerdings mit entsprechend der Höhe des noch vorhandenen Speicherdrucks geminderter Leistungsfähigkeit. Dies gilt so lange, bis, beispielsweise infolge von Betätigungen der Anhängerbremsanlage, der Speicherdruck auf den Wert des Sicherungsdruckes abgefallen ist. In diesem Moment stellt die Steuereinheit (10) die Betätigung des 3/2-Wegeventils (7) ein, welches dadurch in seine zweite Schaltstellung (6) geht. In dieser verbindet das 3/2-Wegeventil (7) seinen ersten Anschluß (13) mit seinem zweiten Anschluß (5) und damit die Vorratsleitung (1) mit dem Steuereingang (20) der Notbremseinrichtung (21). Diesem Steuereingang (20) teilt sich nun der Störungs-Druckabfall oder der inzwischen eingetretene größere Druckabfall in der Vorratsleitung (1) mit, woraufhin die Notbremseinrichtung (21) anspricht und eine automatische Anhängerbremsung auslöst, wobei der Bremsdruck höchstens den Wert des Sicherungsdrucks aufweisen kann.

Es sei noch einmal betont, daß diese automatische Anhängerbremsung nicht schon beim Auftreten des Störungs-Druckabfalls und damit der Störung der Druckmittelversorgung erfolgt, sondern erst beim Abfall des Speicherdrucks auf den Wert des Sicherungsdrucks.

Bei einem Totalabriß fallen die Verbindungen der Vorratsleitung (1) und der elektrischen Bremsleitung (9) mit dem Zugfahrzeug aus. In diesem Falle führt die Vorratsleitung (1) nur Atmosphärendruck. Außerdem erkennt in diesem Fall die Steuereinheit (10), daß die elektrische Bremsleitung (9) nicht mit dem Zugfahrzeug verbunden ist und stellt deshalb die Betätigung des 3/2-Wegeventils (7) ein, welches daraufhin seine zweite Schaltstellung (6) einnimmt und dadurch den Steuereingang (20) der Notbremseinrichtung (21) mit der Vorratsleitung (1) und dadurch mit der Atmosphäre verbindet. Die Notbremseinrichtung (21) bremst deshalb den Anhänger automatisch bzw. hält ihn automatisch gebremst. Dieser Zustand entspricht demjenigen bei vom Zugfahrzeug abgekuppeltem Anhänger, bei dem gleichfalls die Verbindungen der Vorratsleitung (1) und der elektrischen Bremsleitung (9) zum Zugfahrzeug fehlen.

Über die vorstehend beschriebene Grundausführung hinaus zeigt das Ausführungsbeispiel noch mögliche Fortbildungen, auf die nachstehend eingegangen wird.

Die Steuereinheit (10) kann so ausgebildet sein, daß sie auch erkennt, ob die Verbindung der elektrischen Bremsleitung (9) mit dem Zugfahrzeug auf ordnungsgemäße Weise erfolgt ist und/oder ob die Verbindung mit einem ordnungsgemäß ausgerüsteten Zugfahrzeug erfolgt ist. Zu diesem Zweck kann beispielsweise die Bremsleitung (9) zweikreisig ausgebildet sein. Auf ordnungsgemäßen Anschluß kann in diesem Falle die Steuereinheit (10) beispielsweise erkennen, wenn sie über beide Kreise der Bremsleitung (9) angesteuert wird.

An der Vorratsleitung (1) ist eine beispielsweise als Drucksensor ausgebildete Einrichtung (2) angeordnet, die den Vorratsleitungsdruck in der Vorratsleitung (1) überwacht und die bei Abfall desselben auf einen vorbestimmten Wert oder darunter eine Druckmangelanzeige auslöst. Der vorbestimmte Wert kann der Vorratsleitungsdruck nach dem Abfall um den Störungs-Druckabfall sein. In diesem Fall zeigt die Druckmangelanzeige dem Fahrer die Störung an. Der vorbestimmte Wert kann aber auch über diesem Druck liegen. Dann zeigt die Druckmangelanzeige schon eine Gefährdung der Druckmittelversorgung vor Eintritt einer Störung an. Die Einrichtung (2) kann auch an der der Vorratsleitung (1) zugeordneten Leitung im Zugfahrzeug angeordnet sein. Die in bekannter Weise aufgebaute und daher nicht näher dargestellte Druckmangelanzeige sollte zweckmäßigerweise im Wahrnehmungsbereich des Fahrers, beispielsweise im Führerhaus des Zugfahrzeugs, untergebracht sein.

Statt mittels der Einrichtung (2) kann die Druckmangelanzeige auch mittels der Steuerelektronik (10, 14) ausgelöst werden. In diesem Falle müßte der Drucksensor (14) als Druckschalter mit einer zweiten Schaltschwelle bei dem vorbestimmten Wert bzw. die Steuereinheit (10) auf diesen vorbestimmten Wert programmiert und die Steuereinheit (10) darüber hinaus zur Auslösung der Druckmangelanzeige ausgebildet sein.

Mit (19) ist in der Verbindung zwischen dem Ausgang der Notbremseinrichtung (21) und der Zuspanneinrichtung (17) ein Anhängerlöseventil angedeutet, welches ein vorübergehendes Lösen der Anhängerbremse bei abgekuppeltem Anhänger zwecks Manövrierens desselben ermöglicht. Ein solches Anhängerlöseventil ist beispielsweise in der WABCO-Druckschrift "Anhänger-Bremsventil 971 002 Teil 2", Ausgabe 01.79, beschrieben.

Mit (15) ist ein in üblicher Weise aufgebautes und daher nicht näher beschriebenes Wechselventil bezeichnet. Dessen erster Eingang ist mit dem Ausgang des Bremsventils (16), dessen zweiter Eingang ist mit dem Ausgang der Notbremseinrichtung (21) oder, soweit vorhanden, des Anhängerlöseventils (19), und dessen Ausgang ist mit der Zuspanneinrichtung (17), genauer: deren Arbeitskammer, verbunden. Das Wechselventil (15) ermöglicht die Verwendung einer Zuspanneinrichtung (17) mit nur einer Arbeitskammer, weil es bei Verbindung der Zuspanneinrichtung (17) mit dem Druckspeicher (18) über das Bremsventil (16) die Verbindung der Zuspanneinrichtung (17) mit dem Ausgang der Notbremseinrichtung (21) bzw. des Anhängerlöseventils (19) sperrt und dadurch Druckverluste über diese Verbindung verhindert. Entsprechend sperrt das Wechselventil (15) bei Verbindung der Zuspanneinrichtung (17) mit dem Druckspeicher (18) über die Notbremseinrichtung (21) und, gegebenenfalls, über das Anhängerlöseventil (19) die Verbindung der Zuspanneinrichtung (17) mit dem Ausgang des Bremsventils (16) und verhindert dadurch Druckverluste über diese Verbindung.

Schließlich ist die Grundausführung noch um eine Bremsdrucksteuerleitung (24) und eine mit dieser verbundene Betriebsbremseinrichtung (23) fortgebildet. Die Bremsdrucksteuerleitung (24) ist mit dem Zugfahrzeug verbindbar. Die Betriebsbremseinrichtung (23) ist in bekannter Weise aufgebaut, beispielsweise als einfaches Relaisventil, und daher nur schematisch dargestellt. Sie wird von einem Bremssteuerdruck, der im Zugfahrzeug erzeugt und durch die Bremssteuerdruckleitung (24) herangeführt wird, gesteuert, wobei sie eine Verbindung zwischen dem Druckspeicher (18) und der Zuspanneinrichtung (17) herstellt, bis an ihrem Ausgang und damit in der Zuspanneinrichtung (17) ein Bremsdruck herrscht, dessen Wert von dem Wert des Bremssteuerdrucks bestimmt ist.

Diese Fortbildung ermöglicht, die Bremsdrucksteuerleitung (24) und den darin herangeführten Bremssteuerdruck für den Fall eines Ausfalls in den elektrischen Komponenten (9, 10, 14, 16) bzw. (9, 10, 11, 12, 14, 16) der Anhängerbremsanlage oder in der elektrischen Versorgung der Anhängerbremsanlage zur Notsteuerung derselben heranzuziehen. In dieser Fortbildung kann die Anhängerbremsanlage als "elektrisch gesteuerte mit redundanter Drucksteuerung" bezeichnet werden.

Die Fortbildung der Anhängerbremsanlage durch die Bremsdrucksteuerleitung (24) und die Betriebsbremseinrichtung (23) ermöglicht auch, daß die Anhängerbremsanlage von einem Zugfahrzeug aus, welches keine Einrichtung zum Anschluß der elektrischen Bremsleitung (9) aufweist, gesteuert werden kann. Mit anderen Worten ermöglicht diese Fortbildung die Kupplung des die elektrisch gesteuerte Anhängerbremsanlage tragenden Anhängers mit einem konventionell bestückten Zugfahrzeug. Allerdings spricht in diesem Fall die Notbremseinrichtung (21) beim Auftreten des Störungs-Druckabfalls in herkömmlicher Weise an.

Es ist bekannt, die Betriebsbremseinrichtung (23) und die Notbremseinrichtung (21) in einer Baueinheit zu einem Anhänger-Bremsventil zu vereinigen, wie es mit dem Bezugszeichen (22) angedeutet ist. Ein derartiges Anhänger-Bremsventil kann beispielsweise auf einfache Weise aus dem in der WABCO-Druckschrift "Anhänger-Bremsventil 971 002 Teil 2", Ausgabe 01.79, ausführlich beschriebenen hergestellt werden. Zu diesem Zweck braucht nur der eine Absperreinrichtung im Sinne der Absperreinrichtung (26) bildende dortige Lippendichtring durch ein in jede Richtung wirkendes Dichtelement, beispielsweise einen O-Ring, ersetzt zu werden. Dann stellen der untere Teil dieses Anhänger-Bremsventils einschließlich der Anschlüsse (dort 2) in Verbindung mit dem Stößel des oberen Kolbens die Notbremseinrichtung (21) dar.

Durch eine gestrichelt dargestellte Umfassungslinie (4) um die Notbremseinrichtung (21), die Betriebsbremseinrichtung (23), die Absperreinrichtung (26) und das 3/2-Wegeventil (7) herum ist angedeutet, daß einige oder alle dieser Geräte zu einer Baueinheit zusammengefaßt sein können.

Die in Figur 2 dargestellte Anhängerbremsanlage besteht in ihrer Grundausführung aus der Vorratsleitung (1), der elektrischen Bremsleitung (9), einer Steuerelektronik (40, 14), enthaltend eine Steuereinheit (40) und den Drucksensor (14), dem elektrisch betätigten Bremsventil (16), der Notbremseinrichtung (21), der Absperreinrichtung (26), zwei zueinander parallelen Strömungswegen (30, 36, 38, 39) und (30, 31, 33, 39), dem Druckspeicher (18) und der Zuspanneinrichtung (17).

Der Steuereingang (20) der Notbremseinrichtung (21) ist in diesem Ausführungsbeispiel über die Strömungswege (30, 36, 38, 39) und (30, 31, 33, 39) mit der Vorratsleitung verbindbar.

Der erste Strömungsweg (30, 36, 38, 39) besteht außer aus Druckmittelleitungen (30, 39) aus einem elektrisch betätigten ersten Absperrventil (36) und einer in Richtung des Steuereingangs (20) der Notbremseinrichtung (21) durchlässigen und die Gegenrichtung sperrenden zweiten Absperreinrichtung (38). Das erste Absperrventil (36) weist eine Durchgangsstellung (37) und eine Sperrstellung (35) auf und ist derart ausgebildet, daß es bei elektrischer Betätigung die Durchgangsstellung (37) und im übrigen die Sperrstellung (35) einnimmt.

Der zweite Strömungsweg (30, 31, 33, 39) enthält außer den Druckmittelleitungen (30, 39) ein elektrisch betätigtes zweites Absperrventil (33) und eine in Richtung der Vorratsleitung (1) durchlässige und die Gegenrichtung sperrende dritte Absperreinrichtung (31). Das zweite Absperrventil (33) weist eine Durchgangsstellung (32) und eine Sperrstellung (34) auf und ist derart ausgebildet, daß es bei elektrischer Betätigung die Sperrstellung (34) und im übrigen die Durchgangsstellung (32) einnimmt.

Als zweite und dritte Absperreinrichtung (38 und 31) kommen beispielsweise Rückschlagventile in Betracht.

Als Folge der Durchlaßrichtungen der zweiten und dritten Absperreinrichtungen (38 und 31) ist der Steuereingang (20) der Notbremseinrichtung (21), das jeweilige Absperrventil (36) bzw. (33) in seiner Durchgangsstellung (37 bzw. 32) vorausgesetzt, über den ersten Strömungsweg (30, 36, 38, 39) mit Vorratsleitungsdruck beaufschlagbar und über den zweiten Strömungsweg (30, 31, 33, 39) in die Vorratsleitung (1) vom Druck entlastbar.

Die Steuereinheit (40) ist in diesem Falle ausgangsseitig außer mit dem Bremsventil (16) mit beiden Absperrventilen (36) und (33), genauer: mit deren elektrischen Betätigungsgliedern, verbunden. Die Steuereinheit (40) ist derart ausgebildet, daß sie bei mit dem Zugfahrzeug verbundener Bremsleitung (9) das erste Absperrventil (36) ständig betätigt; außerdem ist die Steuereinheit (40) derart ausgebildet, daß sie zusätzlich das zweite Absperrventil (33) betätigt, wenn sie mittels des Drucksensors (14) erkennt, daß der Speicherdruck den Wert des vorbestimmten Sicherungsdrucks oder höhere Werte aufweist.

Erkennt die Steuereinheit (40), daß die elektrische Bremsleitung (9) mit dem Zugfahrzeug verbunden ist, so betätigt sie das erste Absperrventil (36). Dieses wird dadurch in seine Durchgangsstellung (37) gestellt. Der steigende Vorratsleitungsdruck in der Vorratsleitung (1) kann nunmehr über den ersten Strömungsweg (30, 36, 38, 39) zu dem Steuereingang (20) der Notbremseinrichtung (21) übertreten und, wenn er ausreichend hoch ist, die Notbremseinrichtung (21) in ihre Lösestellung zu bringen. Erkennt die Steuereinheit (10) außerdem mittels des Drucksensors (14), daß der Speicherdruck den Wert des Sicherungsdruckes erreicht oder überschritten hat, so betätigt sie auch das zweite Absperrventil (33), welches dadurch in seine Sperrstellung (34) gestellt wird. Nunmehr kann nur noch über den ersten Strömungsweg (30, 36, 38, 39) Vorratsleitungsdruck zu der Steuereinrichtung (20) durchtreten, und zwar nur, wenn er höher ist als der an letzterer vorhandene. Solange das zweite Absperrventil (36) betätigt ist, kann wegen dessen Sperrwirkung und wegen der Sperrwirkung der zweiten Absperreinrichtung (38) der Druck an dem Steuereingang (20) der Notbremseinrichtung (21) nicht abfallen. Ein einmal zu diesem Steuereingang (20) durchgetretener Vorratsleitungsdruck bleibt also während der Betätigungsdauer des zweiten Absperrventils (36) an diesem Steuereingang (20) gefangen.

Der einmal zu dem Steuereingang (21) durchgetretene Vorratsleitungsdruck bleibt also dort zunächst auch gefangen, wenn infolge einer Störung der Druckmittelversorgung der Vorratsleitungsdruck in der Vorratsleitung (1) um den Störungs-Druckabfall abfällt, so daß auch in diesem Ausführungsbeispiel die Anhängerbremsanlage zunächst wie in intaktem Zustand mit einer entsprechend dem Wert des noch vorhandenen Speicherdrucks geminderten Leistungsfähigkeit funktionsfähig bleibt. Dies gilt so lange, bis die Steuereinheit (40) mittels des Drucksensors (14) feststellt, daß der Speicherdruck auf den Wert des Sicherungsdrucks abgefallen ist. In diesem Moment stellt die Steuereinheit (40) die Betätigung des zweiten Absperrventils (33) ein, welches dadurch in seine Durchgangssstellung (32) geht. Nunmehr kann sich der bisher an dem Steuereingang (20) gefangene Druck über den zweiten Strömungsweg (30, 31, 33, 39) auf den etwa noch vorhandenen Rest-Vorratsleitungsdruck abbauen und der Notbremseinrichtung (21) die Auslösung der automatischen Anhängerbremsung ermöglichen.

Im Falle eines Totalabrisses sowie bei vom Zugfahrzeuug abgekoppeltem Anhänger bleiben beide Absperrventile (36 und 33) unbetätigt, so daß der Druck an dem Steuereingang (20) auf Atmosphärendruck abfallen und die Notbremseinrichtung (21) die automatische Bremsung der Anhängerbremsanlage auslösen bzw. diese automatisch gebremst halten kann.

Die Anhängerbremsanlage nach Figur 2 läßt sich wie diejenige nach Figur 1 fortbilden. Allerdings gilt für die Anhängerbremsanlage nach Figur 2 sowohl in der Grundausführung als auch in sämtlichen Fortbildungen, daß sie nicht mit einem Zugfahrzeug betreibbar ist, welches keine Einrichtung zum Anschluß der elektrischen Bremsleitung (9) aufweist. Denn in diesem Fall kann die Steuereinheit (40) ausschließlich erkennen, daß die Bremsleitung (9) nicht mit dem Zugfahrzeug verbunden ist, mit der Folge, daß beide Absperrventile (36 und 33) unbetätigt bleiben. Dadurch bleiben beide Strömungswege (30, 36, 38, 39) und (30, 31, 33, 39) für den Vorratsleitungsdruck, der sich nach dem Verbinden der Vorratsleitung (1) mit dem Zugfahrzeug aufbaut, undurchlässig. Dies gilt für den ersten Strömungsweg (30, 36, 38, 39), weil das erste Absperrventil (36) in seiner Sperrstellung (37) verbleibt, für den zweiten Strömungsweg (30, 31, 33, 39), weil die Absperreinrichtung (31) den Durchgang von der Vorratsleitung (1) her sperrt. Der Steuereingang (20) der Notbremseinrichtung (21) bleibt deshalb in dem von dem vorherigen Abkuppeln des Anhängers herrührenden druckentlasteten Zustand mit der Folge, daß die Notbremseinrichtung (21) die Anhängerbremsanlage automatisch gebremst hält. Diese Eigenschaft der Anhängerbremsanlage nach Figur 2 ist für den Einsatz in Ländern vorteilhaft, in denen der Betrieb einer elektrisch gesteuerten Anhängerbremsanlage mit einem Zugfahrzeug ohne Einrichtung zum Anschluß der elektrischen Bremsleitung (9) verboten ist.

Die Ausführungsbeispiele offenbaren auch eine Grundausführung der Anhängerbremsanlage, in der nur die Vorratsleitung (1), die Notbremseinrichtung (21), der Druckspeicher (18) und die wenigstens eine Zuspanneinrichtung (17) in der beschriebenen Anordnung sowie die Steuerelektronik (10, 14; 40, 14) vorgesehen sind und die Steuerelektronik (10, 14 bzw. 40, 14) in dieser Grundausführung derart ausgebildet ist, daß sie beim Auftreten des Störungs-Druckabfalls die Herstellung der Verbindung zwischen dem Druckspeicher (18) und der Zuspanneinrichtung (17) verhindert. Die Stromversorgung der Steuerelektronik (10, 14 bzw. 40, 14) kann in der Grundausführung über eine Versorgungsleitung vom Zugfahrzeug her oder über eine im Anhänger angeordnete Stromquelle, insbesondere eine Batterie, erfolgen.

Diese Grundausführung der Anhängerbremsanlage bietet einen Ausgangspunkt für vielfältige Fortbildungsmöglichkeiten. Beispielsweise kann sie durch Hinzufügung der Betriebsbremseinrichtung (23) und der Bremsdrucksteuerleitung (24) zu einer rein pneumatisch gesteuerten Anhängerbremsanlage ausgebaut werden.

In der Verbindungsleitung zwischen dem Druckspeicher (18) und der Zuspanneinrichtung (17) kann ein Magnetventil angeordnet sein, das von der Steuerelektronik im Sinne einer Sperrung angesteuert wird, wenn beim Auftreten wenigstens des vorbestimmten Abfalls des Drucks in der Vorratsleitung der Speicherdruck einen Wert aufweist, der wenigstens gleich dem vorbestimmten Sicherungsdruck ist.

Im übrigen gelten, soweit sich aus dem Vorstehenden nichts anderes ergibt, die für ein Ausführungsbeispiel gemachten Ausführungen für das andere Ausführungsbeispiel sowie für die Grundausführung direkt oder in entsprechender Anwendung mit.

Der Fachmann erkennt, daß sich der Schutzbereich der vorliegenden Erfindung nicht in den Ausführungsbeispielen erschöpft, sondern alle Ausgestaltungen umfaßt, deren Merkmale sich den Patentansprüchen unterordnen.

## Patentansprüche

1. Anhängerbremsanlage mit einer mit dem Zugfahrzeug verbindbaren Vorratsleitung (1), wenigstens einer über eine Notbremseinrichtung (21) mit einem Druckspeicher (18) verbindbaren Zuspanneinrichtung (17) und einer Steuerelektronik (10, 14; 40, 14), worin der Druckspeicher (18) über die Vorratsleitung (1) auffüllbar ist und die Notbremseinrichtung (21) derart ausgebildet ist, daß sie beim Auftreten wenigstens eines vorbestimmten Abfalls des Drucks an dem mit der Vorratsleitung in Verbindung stehenden Steuereingang der Notbremseinrichtung die Verbindung zwischen dem Druckspeicher (18) und der Zuspanneinrichtung (17) öffnet,
dadurch gekennzeichnet,
daß die Steuerelektronik (10, 14; 40, 14) derart ausgebildet ist, daß sie bei einem Speicherdruck von Werten wenigstens eines vorbestimmten Sicherungsdrucks verhindert, daß beim Auftreten des vorbestimmten Abfalls des Drucks in der Vorratsleitung (1) eine Verbindung zwischen dem Druckspeicher (18) und der Zuspanneinrichtung (17) hergestellt wird.

2. Anhängerbremsanlage mit den Merkmalen:
a) Es sind eine, jeweils mit dem Zugfahrzeug verbindbare, Vorratsleitung (1) und elektrische Bremsleitung (9) vorgesehen;
b) es ist wenigstens eine über ein elektrisch betätigtes Bremsventil (16) und über eine Notbremseinrichtung (21) mit einem Druckspeicher (18) verbindbare Zuspanneinrichtung (17) vorgesehen;
c) der Druckspeicher (18) ist über eine in Richtung des Druckspeichers (18) durchlässige Absperreinrichtung (26) mit der Vorratsleitung (1) verbunden;
d) die Notbremseinrichtung (21) weist wenigstens einen Steuereingang (20) auf und ist derart ausgebildet, daß sie beim Auftreten wenigstens eines vorbestimmten Abfalls des Drucks an dem Steuereingang (20) die Verbindung zwischen dem Druckspeicher (18) und der Zuspanneinrichtung (17) öffnet;
e) es ist eine Steuerelektronik (10, 14) vorgesehen, die eingangsseitig mit der Bremsleitung (9) und ausgangsseitig mit dem Bremsventil (16) verbunden ist;
gekennzeichnet durch die Merkmale:
f) es ist ein elektrisch betätigtes 3/2-Wegeventil (7) vorgesehen, dessen erster Anschluß (13) mit dem Steuereingang (20) der Notbremseinrichtung (21), dessen zweiter Anschluß (3) mit dem Druckspeicher (18) und dessen dritter Anschluß (5) mit der Vorratsleitung (1) verbunden sind;
g) das 3/2-Wegeventil (7) ist derart ausgebildet, daß es seinen ersten Anschluß (13) bei elektrischer Betätigung mit seinem zweiten Anschluß (3) und im übrigen mit seinem dritten Anschluß (5) verbindet;
h) die Steuerelektronik (10, 14) ist ausgangsseitig mit dem 3/2-Wegeventil (7) verbunden und derart ausgebildet, daß sie bei mit dem Zugfahrzeug verbundener Bremsleitung (9) und bei einem Speicherdruck von Werten wenigstens eines vorbestimmten Sicherungsdruckes das 3/2-Wegeventil (7) betätigt.

3. Anhängerbremsanlage mit den Merkmalen:
a) Es sind eine, jeweils mit dem Zugfahrzeug verbindbare, Vorratsleitung (1) und elektrische Bremsleitung (9) vorgesehen;
b) es ist wenigstens eine über ein elektrisch betätigtes Bremsventil (16) und über eine Notbremseinrichtung (21) mit einem Druckspeicher (18) verbindbare Zuspanneinrichtung (17) vorgesehen;
c) der Druckspeicher (18) ist über eine in Richtung des Druckspeichers (18) durchlässige Absperreinrichtung (26) mit der Vorratsleitung (1) verbunden;
d) die Notbremseinrichtung (21) weist wenigstens einen Steuereingang (20) auf und ist derart ausgebildet, daß sie beim Auftreten wenigstens eines vorbestimmten Abfalls des Drucks an dem Steuereingang (20) die Verbindung zwischen dem Druckspeicher (18) und der Zuspanneinrichtung (17) öffnet;
e) es ist eine Steuerelektronik (40, 14) vorgesehen, die eingangsseitig mit der Bremsleitung (9) und ausgangsseitig mit dem Bremsventil (16) verbunden ist;
gekennzeichnet durch die Merkmale:
f) der Steuereingang (20) der Notbremseinrichtung (21) ist über einen ersten Strömungsweg (30, 36, 38, 39) und einen parallel zu diesem angeordneten zweiten Strömungsweg (30, 31, 33, 39) mit der Vorratsleitung (1) verbindbar;
g) in dem ersten Strömungsweg (30, 36, 38, 39) sind ein elektrisch betätigtes erstes Absperrventil (36) und eine in Richtung des Steuereingangs (20) der Notbremseinrichtung (21) durchlässige zweite Absperreinrichtung (38) angeordnet;
h) in dem zweiten Strömungsweg (30, 31, 33, 39) sind ein elektrisch betätigtes zweites Absperrventil (33) und eine in Richtung der Vorratsleitung (1) durchlässige dritte Absperreinrichtung (31) angeordnet;
i) das erste Absperrventil (36) ist derart ausgebildet, daß es bei elektrischer Betätigung eine Durchgangsstellung (37) und im übrigen eine Sperrstellung (35) einnimmt;
j) das zweite Absperrventil (33) ist derart ausgebildet, daß es bei elektrischer Betätigung eine Sperrstellung (34) und im übrigen eine Durchgangsstellung (32) einnimmt;
k) die Steuerelektronik (40, 14) ist ausgangsseitig mit den Absperrventilen (36 und 33) verbunden und derart ausgebildet, daß sie bei mit dem Zugfahrzeug verbundener Bremsleitung (9) das erste Absperrventil (36) und bei einem Speicherdruck von Werten wenigstens eines vorbestimmten Sicherungsdrucks auch das zweite Absperrventil (33) betätigt.

4. Anhängerbremsanlage nach einem der Ansprüche 1 bis 3,
dadurch gekennzeichnet,
daß ihr eine den Vorratsleitungsdruck in der Vorratsleitung (1) überwachende Einrichtung (2) zugeordnet ist, die bei einem vorbestimmten Abfall Vorratsleitungsdruckes eine Druckmangelanzeige auslöst.

5. Anhängerbremsanlage nach einem der Ansprüche 2 bis 4,
gekennzeichnet durch die Merkmale:
a) Die Ausgänge des elektrisch betätigten Bremsventils (16) und der Notbremseinrichtung (21) sind mit derselben Arbeitskammer der Zuspanneinrichtung (17) verbindbar;
b) es ist ein Wechselventil (15) vorgesehen, dessen erster Eingang mit dem Ausgang des Bremsventils (16), dessen zweiter Eingang mit dem Ausgang der Notbremseinrichtung (21) und dessen Ausgang mit der Arbeitskammer der Zuspanneinrichtung (17) verbunden sind.

6. Anhängerbremsanlage nach einem der vorhergehenden Ansprüche,
gekennzeichnet durch die Merkmale:
a) Es ist eine mit dem Zugfahrzeug verbindbare Bremssteuerdruckleitung (24) vorgesehen, die einen Bremssteuerdruck heranführt;
b) es ist eine mit der Bremsdrucksteuerleitung (24) verbundene Betriebsbremseinrichtung (23) vorgesehen, welche eine Verbindung zwischen dem Druckspeicher (18) und der Zuspanneinrichtung (17) nach Maßgabe des Bremssteuerdrucks öffnet.

7. Anhängerbremsanlage nach einem der vorhergehenden Ansprüche,
dadurch gekennzeichnet,
daß in der Verbindung zwischen der Notbremseinrichtung (21) einerseits und der Zuspanneinrichtung (17) andererseits ein Anhängerlöseventil (19) angeordnet ist.

8. Anhängerbremsanlage nach Anspruch 1,
dadurch gekennzeichnet,
daß in der Verbindungsleitung zwischen dem Druckspeicher (18) und der Zuspanneinrichtung (17) ein Magnetventil (7; 36) angeordnet ist, das von der Steuerelektronik im Sinne einer Sperrung angesteuert wird, wenn beim Auftreten wenigstens des vorbestimmten Abfalls des Drucks in der Vorratsleitung der Speicherdruck einen Wert aufweist, der wenigstens gleich dem vorbestimmten Sicherungsdruck ist.

## Claims

1. Trailer brake system having a supply line (1) that can be connected to a traction vehicle, at least one application device (17) that can be connected to a pressure reservoir (18) by way of an emergency brake device (21), and an electronic control system (10, 14; 40, 14), wherein the pressure reservoir (18) is able to be filled by way of the supply line (1) and the emergency brake device (21) is so constructed that, on the occurrence of at least a predetermined drop in the pressure at a control input, connected to the supply line, of the emergency brake device, it opens the connection between the pressure reservoir (18) and the application device (17),
characterized in that
the electronic control system (10, 14; 40, 14) is so constructed that in the case of a reservoir pressure of at least a predetermined safety pressure, on the occurrence of the predetermined drop in the pressure in the supply line (1), it prevents a connection from being produced between the pressure reservoir (18) and the application device (17).

2. Trailer brake system having the features:
a) a supply line (1) and an electrical brake line (9) are provided, each of which is able to be connected to a traction vehicle;
b) there is provided at least one application device (17) that can be connected to a pressure reservoir (18) by way of an electrically actuated brake valve (16) and by way of an emergency brake device (21);
c) the pressure reservoir (18) is connected to the supply line (1) by way of a shut-off device (26) which allows flow in the direction of the pressure reservoir (18);
d) the emergency brake device (21) has at least one control input (20) and is so constructed that on the occurrence of at least a predetermined drop in the pressure at the control input (20) it opens the connection between the pressure reservoir (18) and the application device (17);
e) an electronic control system (10, 14) is provided which is connected on the input side to the brake line (9) and on the output side to the brake valve (16);
characterized by the features:
f) an electrically actuated 3/2-way valve (7) is provided, a first connection (13) of which is connected to the control input (20) of the emergency brake device (21), a second connection (3) of which is connected to the pressure reservoir (18) and a third connection (5) of which is connected to the supply line (1);
g) the 3/2-way valve (7) is so constructed that on electrical actuation it connects its first connection (13) to its second connection (3) and otherwise to its third connection (5);
h) the electronic control system (10, 14) is connected on the output side to the 3/2-way valve (7) and is so constructed that it actuates the 3/2-way valve (7) when the brake line (9) is connected to the traction vehicle and when there is a reservoir pressure of at least a predetermined safety pressure.

3. Trailer brake system having the features:
a) a supply line (1) and an electrical brake line (9) are provided, each of which is able to be connected to a traction vehicle;
b) at least one application device (17) that can be connected to a pressure reservoir (18) by way of an electrically actuated brake valve (16) and by way of an emergency brake device (21) is provided;
c) the pressure reservoir (18) is connected to the supply line (1) by way of a shut-off device (26) which allows flow in the direction of the pressure reservoir (18);
d) the emergency brake device (21) has at least one control input (20) and is so constructed that on the occurrence of at least a predetermined drop in the pressure at the control input (20) it opens the connection between the pressure reservoir (18) and the application device (17);
e) an electronic control system (40, 14) is provided which is connected on the input side to the brake line (9) and on the output side to the brake valve (16);
characterized by the features:
f) the control input (20) of the emergency brake device (21) is able to be connected to the supply line (1) by way of a first flow path (30, 36, 38, 39) and a second flow path (30, 31, 33, 39) arranged parallel to the latter;
g) in the first flow path (30, 36, 38, 39) are arranged an electrically actuated first shut-off valve (36) and a second shut-off device (38) allowing flow in the direction of the control input (20) of the emergency brake device (21);
h) in the second flow path (30, 31, 33, 39) are arranged an electrically actuated second shut-off valve (33) and a third shut-off device allowing flow in the direction of the supply line (1);
i) the first shut-off valve (36) is so constructed that on electrical actuation it assumes a through passage position (37) and otherwise a blocking position (35);
j) the second shut-off valve (33) is so constructed that on electrical actuation it assumes a blocking position (34) and otherwise a through passage position (32);
k) the electronic control system (40, 14) is connected on the output side to the shut-off valves (36 and 33) and is so constructed that, when the brake line (9) is connected to the traction vehicle, the electronic control system actuates the first shut-off valve (36) and when there is a reservoir pressure of at least a predetermined safety pressure it also actuates the second shut-off valve (33).

4. Trailer brake system according to one of Claims 1 to 3,
characterized in that,
there is associated with it a device (2) which monitors the pressure in the supply line (1) and in the case of a predetermined drop in the supply line pressure actuates a lack-of-pressure indication.

5. Trailer brake system according to one of Claims 2 to 4,
characterized by the features:
a) The outputs of the electrically actuated brake valve (16) and of the emergency brake device (21) are able to be connected to the same working chamber of the application device (17);
b) a shuttle valve (15) is provided, a first input of which is connected to the output of the brake valve (16), a second input of which is connected to the output of the emergency brake device (21) and its output is connected to the working chamber of the application device (17).

6. Trailer brake system according to one of the preceding claims,
characterized by the features:
a) A brake control pressure line (24) is provided which is able to be connected to the traction vehicle and which supplies a brake control pressure;
b) an operating brake device (23) is provided which is connected to the brake pressure control line (24) and opens a connection between the pressure reservoir (18) and the application device (17) depending on the brake control pressure.

7. Trailer brake system according to one of the preceding claims,
characterised in that
in the connection between the emergency brake device (21) on the one hand and the application device (17) on the other hand there is arranged a trailer release valve (19).

8. Trailer brake system according to Claim 1,
characterised in that
in the connecting line between the pressure reservoir (18) and the application device (17) there is arranged a magnetic valve (7; 36) which is triggered by the electronic control system for blocking, when, on the occurrence of at least the predetermined drop in the pressure in the supply line, the reservoir pressure has a value which is at least equal to the predetermined safety pressure.

## Revendications

1. Système de freinage pour remorque comportant une conduite d'alimentation (1) qui peut être reliée au véhicule tracteur, au moins un dispositif d'application du frein (17) qui peut être relié à un réservoir de pression (18) par l'intermédiaire d'un dispositif de freinage de secours (21) et d'un circuit électronique de commande (10, 14; 40, 14), système dans lequel le réservoir de pression (18) peut être rempli par l'intermédiaire de la conduite d'alimentation (1) et dans lequel le dispositif de freinage de secours (21) est conçu de façon que lors de la survenance d'au moins une chute prédéterminée de la pression à l'entrée de commande du dispositif de freinage de secours reliée à la conduite d'alimentation, la liaison entre le réservoir de pression (18) et le dispositif d'application du frein (17) s'établisse,
caractérisé
par le fait que le circuit électronique de commande (10, 14; 40, 14) est conçu de façon que, pour une pression dans le réservoir d'une valeur au moins égale à une pression de sécurité prédéterminée, il interdit que, lors de la survenance de la chute de pression prédéterminée dans la conduite d'alimentation (1), une liaison s'établisse entre le réservoir de pression (18) et le dispositif d'application du frein (17).

2. Système de freinage pour remorque présentant les caractéristiques suivantes:
a) sont prévues une conduite d'alimentation (1), qui peut être chaque fois reliée au véhicule tracteur, et une ligne électrique de freinage (9);
b) est prévu au moins un dispositif d'application du frein (17) qui peut être relié avec un réservoir de pression (18) par l'intermédiaire d'un robinet de frein (16) à manoeuvre électrique et d'un dispositif de freinage de secours (21);
c) le réservoir de pression (18) est relié à la conduite d'alimentation (1) par l'intermédiaire d'un dispositif d'arrêt (26) qui laisse passer en direction du réservoir de pression (18);
d) le dispositif de freinage de secours (21) présente au moins une entrée de commande (20), est conçu de façon que lors de la survenance d'au moins une chute de pression prédéterminée à l'entrée de commande (20), la liaison entre le réservoir de pression (18) et le dispositif d'application du frein (17) s'établisse;
e) est prévu un circuit électronique de commande (10, 14) qui est relié, du côté de l'entrée, à la ligne électrique de freinage (9) et du côté de la sortie au robinet de frein (16);
caractérisé par les caractéristiques suivantes:
f) est prévu un robinet 3/2 voies (7), à manoeuvre électrique, dont le premier raccord (13) est relié avec l'entrée de commande (20) du dispositif de freinage de secours (21), dont le second raccord (3) est relié avec le réservoir de pression (18) et dont le troisième raccord (5) est relié avec la conduite d'alimentation (1);
g) le robinet (3/2 voies (7) est conçu de façon que lorsqu'il est activé électriquement il relie son premier raccord (13) avec son second raccord (3) et que sinon il le relie avec son troisième raccord (5);
h) le circuit électronique de commande (10, 14) est relié, du côté de la sortie, avec le robinet 3/2 voies (7) et il est conçu de façon à activer le robinet 3/2 voies (7) lorsque la ligne électrique de freinage (9) est reliée avec le véhicule tracteur et que la pression dans le réservoir a une valeur au moins égale à une pression de sécurité prédéterminée.

3. Système de freinage pour remorque présentant les caractéristiques suivantes:
a) sont prévues une conduite d'alimentation (1), qui peut être chaque fois reliée au véhicule tracteur, et une ligne électrique de freinage (9);
b) est prévu au moins un dispositif d'application du frein (17) qui peut être relié avec un réservoir de pression (18) par l'intermédiaire d'un robinet de frein (16) à manoeuvre électrique et d'un dispositif de freinage de secours (21);
c) le réservoir de pression (18) est relié à la conduite d'alimentation (1) par l'intermédiaire d'un dispositif d'arrêt (26) qui laisse passer en direction du réservoir de pression (18);
d) le dispositif de freinage de secours (21) présente au moins une entrée de commande (20), est conçu de façon que lors de la survenance d'au moins une chute de pression prédéterminée à l'entrée de commande (20), la liaison entre le réservoir de pression (18) et le dispositif d'application du frein (17) s'établisse;
e) est prévu un circuit électronique de commande (40, 14) qui est relié, du côté de l'entrée, à la ligne électrique de freinage (9) et du côté de la sortie au robinet de frein (16);
caractérisé par les caractéristiques suivantes:
f) l'entrée de commande (20) du dispositif de freinage de secours (21) peut être reliée avec la conduite d'alimentation (1) par l'intermédiaire d'un premier chemin d'écoulement (30, 36, 38, 39) et d'un second chemin d'écoulement (30, 31, 33, 39) disposé parallèlement à celui-ci;
g) sur le premier chemin d'écoulement (30, 36, 38, 39) sont disposés un premier robinet d'arrêt (36) à manoeuvre électrique et un second dispositif d'arrêt (36) qui laisse passer en direction de l'entrée de commande (20) du dispositif de freinage de secours (21);
h) sur le second chemin d'écoulement (30, 31, 33, 39) sont disposés un second robinet d'arrêt (33) à manoeuvre électrique et un troisième dispositif d'arrêt (31) qui laisse passer en direction de la conduite d'alimentation (1);
i) le premier robinet d'arrêt (36) est conçu de façon à prendre une position de passage (37) lorsqu'il est activé électriquement et, sinon, une position d'arrêt (35);
j) le second robinet d'arrêt (33) est conçu de façon à prendre une position d'arrêt (34) lorsqu'il est activé électriquement et sinon une position de passage (32);
k) le circuit électronique de commande (40, 14) est relié, du côté de la sortie, avec les robinets d'arrêt (36 et 33) et il est conçu de façon à activer le premier robinet d'arrêt (36) lorsque la ligne électrique de freinage (9) est reliée avec le véhicule tracteur et à activer également le second robinet d'arrêt (33) lorsque la pression dans le réservoir a une valeur au moins égale à une pression de sécurité prédéterminée.

4. Système de freinage pour remorque selon l'une des revendications 1 à 3,
caractérisé
par le fait que lui correspond un dispositif (2) qui surveille la pression régnant dans la conduite d'alimentation (1) et qui, en cas de chute prédéterminée de la pression régnant dans la conduite d'alimentation, déclenche une indication de manque de pression.

5. Système de freinage pour remorque selon l'une des revendications 2 à 4,
caractérisé par les caractéristiques suivantes
a) les sorties du robinet de freinage (16) à manoeuvre électrique et du dispositif de freinage de secours (21) peuvent être reliées avec la même chambre de travail du dispositif d'application du frein (17);
b) est prévu un robinet à plusieurs voies (15) dont la première entrée est reliée avec la sortie du robinet de frein (16), dont la seconde entrée est reliée avec la sortie du dispositif de freinage de secours (21) et dont la sortie est reliée avec la chambre de travail du dispositif d'application du frein (17).

6. Système de freinage pour remorque selon l'une des revendications précédentes,
caractérisé par les caractéristiques suivantes
a) est prévue une conduite de pression de commande de freinage (24) qui peut être reliée avec le véhicule tracteur et qui amène une pression de commande de freinage;
b) est prévu un dispositif de freinage de service (23) qui est relié à la conduite de commande de la pression de freinage (24) et qui établit une liaison entre le réservoir de pression (18) et le dispositif d'application du frein (17) en fonction de la pression de commande de freinage.

7. Système de freinage pour remorque selon l'une des revendications précédentes,
caractérisé
par le fait que dans la liaison entre le dispositif de freinage de secours (21) d'une part et le dispositif d'application du frein (17) d'autre part est disposé un robinet (19) de déblocage de la remorque.

8. Système de freinage pour remorque selon la revendication 1,
caractérisé
par le fait que dans la conduite de liaison entre le réservoir de pression (18) et le dispositif d'application du frein (17) est disposé une électrovanne (7; 36) qui est excitée par le circuit électronique de commande dans le sens d'une fermeture lorsque, lors de la survenance d'au moins la chute de pression prédéterminée dans la conduite d'alimentation, la pression dans le réservoir présente une valeur qui est au moins égale à la pression de sécurité prédéterminée.
